# EUROPEAN PATENT SPECIFICATION

(11) **EP 0 965 443 B1**
(45) Date of publication and mention of the grant of the patent: **21.01.2004**
(21) Application number: 98111385.5
(22) Date of filing: 20.06.1998
(51) Int. Cl.: B32B 27/08, B65D 65/40

(54) **Polymer composite tubular film with barrier structures**
Mehrschichtiger Kunststoffschlauch mit Sperrschichtstrukturen
Film polymère tubulaire multicouche avec des structures protectrices

(43) Date of publication of application: 22.12.1999
(73) Proprietor: SWECO S.A., 1203 Geneva (CH)
(72) Inventor: Loretti, Maurice, 1219 Chatelaine (CH)
(74) Representative: Jönsson, Hans-Peter, Dr.Dipl.-Chem.

(56) References cited:
- EP-A- 0 322 891
- EP-A- 0 504 808
- EP-A- 0 530 539
- EP-A- 0 774 348

## Description

The present invention relates to a sterilizable coextruded polymer composite tubular film, the use of such tubular films for the preparation of peelable containers intended, for example, for medicaments or infusion solutions.

Solutions, suspensions, solids or mixtures for parenteral or enteral nutrition or tube feeding are conventionally filled under sterile conditions in various kinds of containers in the prior art. The use of bags with such contents is widespread in the prior art. The individual contents are partly premixed and partly present in spatially separated arrangements so that the mixing of the contents is frequently only performed immediately prior to use at the bedside of the patient.

Those bags contain removal means for removing the contents under conditions as sterile as possible.

Thus, an outer packing of poly(vinylidene chloride) copolymers (PVDC) has become established in the prior art which is not suitable, however, to ensure sterility of the bag surface and of the removal means. One drawback of the use of poly(vinylidene chloride) is, however, the ecologically incompatible chlorine content of the poly(vinylidene chloride) copolymer which, in addition, cannot be sterilized with usual methods. However, the excellent permeabilities to gas, water vapor, flavors and lipids under dry and moist conditions have outweighed the recycling problems in the past.

In the prior art, other materials are known for corresponding barrier layers (barrier polymers). Thus, in Ullmann's Encyclopaedia of Industrial Chemistry, 5th edition, Volume 11, Section 6.5.10, poly(vinyl alcohol) and ethylene/vinyl alcohol copolymers are also described as barrier layers in addition to PVDC.

In ethylene/vinyl alcohol copolymers, the moisture sensitivity of the poly(vinyl alcohol) is reduced by the copolymerization with ethylene. The usual vinyl alcohol content is from 60 to 82 %, corresponding to an ethylene content of 18 to 40 %. In Section 6.5.12, polymer composites are described. Since, for many applications, one single layer of a polymer fails to meet the requirements of the good to be packed inter alia, the coextrusion of different polymers is described in order to improve, for example, the thermal properties or the barrier properties.

WO 95/27268 describes a multilayer composite sheet comprising at least one layer sequence which includes a heterophase polypropylene (co)polymer/bonding layer/EVOH/ bonding layer/polyolefin layer, the heterophase polypropylene (co)polymer consisting of a homopolymer of propylene or a copolymer of propylene with ethylene and/or an α-olefin.

EP 0 774 348 A2 relates to a sterilisable tubular film for use as outer packaging for medical solutions etc..Sterilisable co-extruded tubular film made of polymer composite, for wrapping containers for solutions, suspensions, solids or mixtures for parenteral, enteral or stomach tube feeding, optionally with contents in separated compartments are described. The tube consists of three layers as follows: (a) polypropylene homopolymer (homo-PP), (b) EVA copolymer with an ethylene content of 27 to 38 mol % and (c) a single-phase PP homo- or copolymer which is suitable as the insides of a bag for the inner container. Also claimed is (i) production of this tubular film by co-extrusion; and (ii) peelable, sterilised packs for containers, made from this film. Preferably layers (a), (b) and (c) have thicknesses of 20-40 (preferably 25-35), 15-35 (preferably 20-30) and 30-50 (preferably 35-45) µm respectively. The EVA copolymer (b) preferably has an ethylene content of 29-32 mol %, and the PP copolymer is a copolymer of propylene and ethylene.

EP 0 353 193 describes a multilayer sheet material of a foil made of a polyamide 11, i. e. the polyamide of the 11-aminoundecanoic acid which is bonded by at least one of its surfaces to a film of polypropylene. The material is obtained by co-extrusion of said polyamide and polypropylene.

Thus, the object of the present invention is to provide an improved sterilizable coextruded polymer composite tubular film for use as containers for solutions, suspensions, solids or mixtures for parenteral or enteral nutrition or tube feeding, optionally in a spatially separated arrangement of the contents, which is suitable for ensuring a sterility of the removal means.

According to the invention, the above object is achieved by an improved sterilizable coextruded polymer composite tubular film for use as containers for solutions, suspensions, solids or mixtures for parenteral or enteral nutrition or tube feeding, optionally in a spatially separated arrangement of the contents, having a three-layered structure of the tubular film with the following layer sequence :
a) polyamide 11 and/or polyetherblock amide
b) ethylene/vinyl alcohol copolymer with an ethylene content of 27 to 38 mole %; and
c) homophase polypropylene copolymer which is suitable for forming the interior surface of the container.

By means of the present invention, it is possible to prepare tubular films and, therefrom, sterilizable containers, especially bags, in a multilayer coextrusion blowing method which enable an ecologically compatible disposal. Besides the common sterilization of the polymer composite tubular film forming the container, it is possible to sterilize the container. The bags thus obtained are heat-sealable.

Polyamide 11 is commercially available for example unter the tradename Rilsan®. Polyetherblock amides in the same way are commercially available for example under the trademark Pebax®.

The core of the three-layered structure of the blown film according to the invention is the ethylene/vinyl alcohol copolymer layer b) with a defined ethylene content of 27 to 38 mol %. Namely, if the ethylene content is chosen too high, the ethylene/vinyl alcohol copolymer layer b) is destroyed in the usual steam sterilization and looses its gas barrier properties so that the object of the invention cannot be achieved satisfactorily.

Experiments have shown that the desired product properties are particularly pronounced at an ethylene content of 29 to 32 %. The ethylene/vinyl alcohol copolymer layer b) should have a thickness of 5 to 35 µm, especially from 10 to 30 µm.

Therefore, it is particularly preferred according to the present invention to adjust the ethylene content of the ethylene/vinyl alcohol copolymer layer b) within the range of 29 to 32 % mol %, since this results is in a particularly low gas permeability. In addition, the strerilizability and the core layer stability of the layer structure according to the invention is particularly pronounced within this range of values.

The ethylene/vinyl alcohol copolymer layer b) is coextruded with the outer layer a) which should have a thickness of 40 to 100 µm, especially from 45 to 75 µm, according to the invention. This outer layer protects the poly(vinyl alcohol) of core layer b) from moisture and confers the necessary thermal stability to the overall structure due to the high softening point of the polymer which is to be selected above the usual sterilization temperatures.

The homophase polypropylene copolymer layer c) which is suitable for forming the interior surface of the said container and thus, being in direct contact with the content, should preferably have a thickness of 60 to 100 µm, especially from 65 to 85 µm. In this case too, it is necessary to provide a material having a high softening point which is above the usual sterilization temperatures. This layer, essentially consisting of polypropylene also protects the poly(vinyl alcohol) fraction of core layer b) from moisture, and confers the desired mechanical stability to the overall structure.

If polypropylene copolymers are used, in addition to the propylene component, the random copolymer may contain ethylene, which in particular can be contained in the copolymers in amounts of 2 to 5 % by weight.

In a preferred embodiment the polymer layer a) may optionally contain from 0.5 to 2 % by weight of an absorbent, in particular, for oxygen and/or hydrogen sulphide. The use of Fe₃O₄ is particularly preferred according to the present invention.

The method of choice for the preparation of the tubular film according to the invention is the per se known method of multilayer coextrusion blowing.

Another aspect of the present invention is the use of the above tubular film for the preparation of peelable containers for solutions, suspensions, solids or mixtures for parenteral or enteral nutrition or tube feeding, optionally in a spatially separated arrangement of the contents. These containers do not require the use of an overpack as is standard practice in the art.

Preferred sterilization methods are the sterilization at a temperature of 121°C for a period of time which ensures sterility in steam-type autoclaves or in a water cascade, or the sterilization with ethylene oxide.

The tubular film material according to the invention is heat-sealable and peelable so that the containers can be prepared with the tubular film according to the invention, especially by hot-sealing.

Accordingly, another aspect of the present invention are peelable, sterilizable containers for solutions, suspensions, solids or mixtures for parenteral or enteral nutrition or tube feeding, optionally in a spatially separated arrangement of the contents, having a three-layered structure of the tubular film of the packing.

In the prior art of parenteral nutrition, oxygen absorbers have been often employed to date in order to protect the contents from oxygen. Under the trademark «Ageless», for example, an absorbent material based on iron salts is commercially available which, in addition to a reduction of the oxygen content, lowers the hydrogen sulphide content derived from sulphur-containing ingredients in usual sterilization methods. Said absorber is used in the prior art when overpacking the container with an additional overpack. In the present invention the absorber «Ageless» is not used.

### Examples

A 100 l charge with 2.0 g/l ascorbic acid was filled in about 400 containers as follows :
A)*- 100 containers in glass bottle
B)*- 100 containers according to EP 0 353 193 A(multilayer foil of PAT11/Tie or bonding layer/PP copolymer).
C)*- 50 containers in ethyl vinyl acetate foil
D)*- 100 containers according to B) overpacked in a foil according to EP 0 774 348 A (PP/EVOH/PP)
E)- 100 containers in foil with the following sequence:
   1. Polyamide 11 (Rilsan®) 50 µm
   2. Tie or bonding layer 15 µm
   3. Ethylene-vinylalcohol-copolymer (ethylene content 32 mol %) 30 µm
   4. Tie or bonding 15 µm
   5. Polypropylene layer (meltflow index MFI (2,16; 230) of 1,9, a flexional modulus of 1400 MPa and a Charpy impact strength, measured at 23 °C of 6 KJ/m²) 75 µm.

*Comparative Example

### Study 1 :

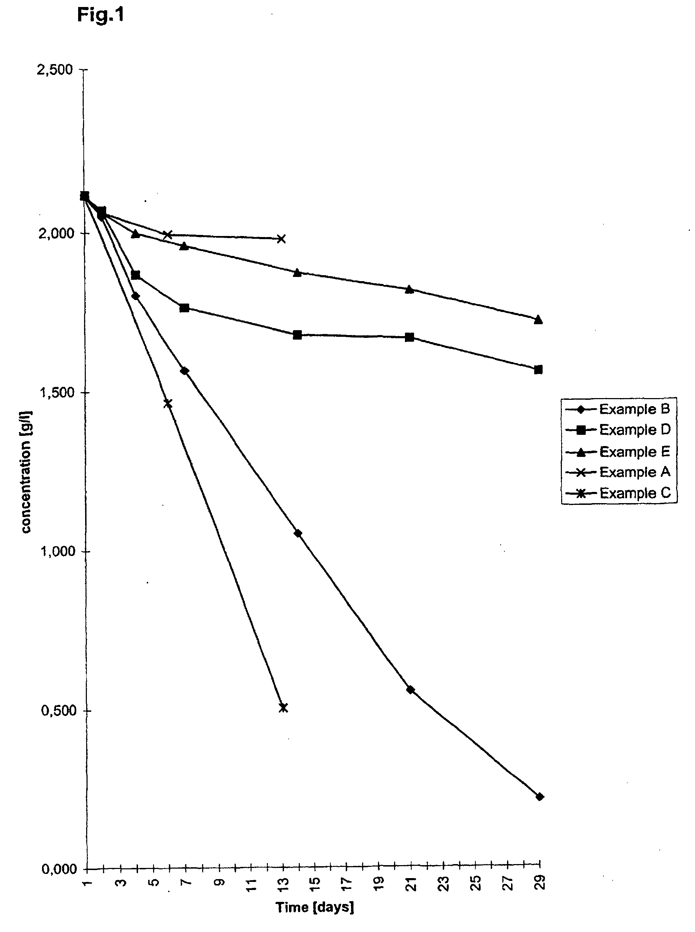

Half part of the charges A-B-C-D-E have been sterilized at 121°C and stored at 40°C for a comparative study (Fig. 1).

### Study 2 :

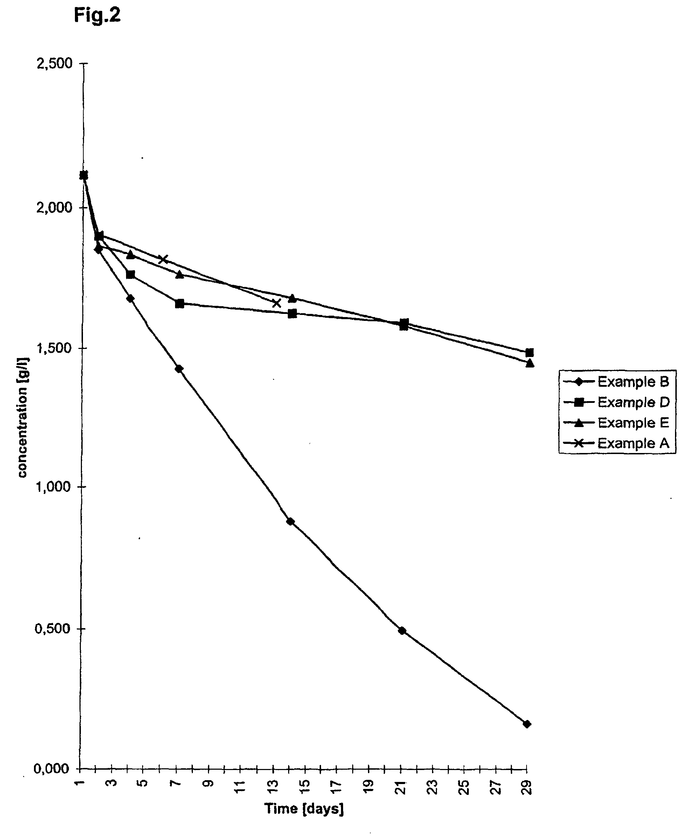

Half part of the charges A-B-D-E have been stored at 40°C for a comparative study with the charge C (Fig. 2).

### Conclusion

After a few weeks storage, it was noted (Fig. 1) that the quality of the foil E is good and the oxidation of the ascorbic acid is very low when compared to the other foils of containers according to B and C.

## Claims

1. Sterilizable coextruded polymer composite tubular film for use as containers for solutions, suspensions, solids or mixtures for parenteral or enteral nutrition or tube feeding, optionally in a spatially separated arrangement of the contents, having a three-layered structure of the tubular film with the following layer sequence :
a) polyamide 11 and/or polyetherblock amide
b) ethylene/vinyl alcohol copolymer with an ethylene content of 27 to 38 mole %; and
c) homophase polypropylene copolymer which is suitable for forming the interior surface of the container.

2. Sterilizable coextruded polymer composite tubular film according to claim 1, **characterized in that** the layer a) contains polyetherblockamide polymer.

3. Sterilizable coextruded polymer composite tubular film according to claim 1 **characterized in that** the layers a) and b) are bonded by an adhesive layer and/or that the layers b) and c) are also bonded by an adhesive layer.

4. The tubular film according to claim 1 and 2, **characterized in that** the outer layer a) has a thickness of 40 to 100 µm, especially from 45 to 75 µm.

5. The tubular film according to one of claims 1 to 4, **characterized in that** the ethylene/vinyl alcohol copolymer layer b) has a thickness of 5 to 35 µm, especially from 10 to 30 µm.

6. The tubular film according to one of claims 1 to 5, **characterized in that** the ethylene/vinyl alcohol copolymer layer b) has an ethylene content of 29 to 32 mole %.

7. The tubular film according to one of claims 1 to 6, **characterized in that** the polypropylene copolymer layer c) has a thickness of 60 to 100 µm, especially from 65 to 85 µm.

8. The tubular film according to one of claims 1 to 7, **characterized in that** the polypropylene copolymer is composed of ethylene in addition to propylene.

9. A method for the preparation of tubular films according to one of claims 1 to 8 by coextrusion of foils a), b) and c).

10. Use of a tubular film according to one or more of claims 1 to 8 for the preparation of peelable containers for solutions, suspensions, solids or mixtures for parenteral or enteral nutrition or tube feeding, optionally in a spatially separated arrangement of the contents.

11. The use according to claim 10 by hot-sealing along a perimeter edge of two adjoining tubular films.

12. The use of a tubular film according to claim 10 for sterilization at a temperature of 121°C for a period of time which ensures sterility in steam-type autoclaves or in a water cascade, or for the sterilization with ethylene oxide.

13. Peelable sterilizable containers, obtainable according to one of claims 10 to 12.

## Patentansprüche

1. Sterilisierbare, coextrudierte Polymerkomposit-Schlauchfolie zur Verwendung als Behälter für Lösungen, Suspensionen, Feststoffe oder Mischungen für die parenterale oder enterale Ernährung oder Schlauchernährung, gegebenenfalls in einer räumlich abgetrennten Anordnung der Inhaltsstoffe, wobei die Schlauchfolie eine Dreischichtenstruktur mit der folgenden Reihenfolge der Schichten aufweist:
a) Polyamid 11 und/oder Polyetherblockamid,
b) Ethylen/Vinylalkohol-Copolymer mit einem Ethylengehalt von 27 bis 38 Mol-%, und
c) Homophasen-Polypropylen-Copolymer, das zur Bildung der Innenfläche des Behälters geeignet ist.

2. Sterilisierbare, coextrudierte Polymerkomposit-Schlauchfolie gemäß Anspruch 1, **dadurch gekennzeichnet, dass** die Schicht a) Polyetherblockamid-Polymer enthält.

3. Sterilisierbare, coextrudierte Polymerkomposit-Schlauchfolie gemäß Anspruch 1, **dadurch gekennzeichnet, dass** die Schichten a) und b) durch eine Klebstoffschicht verklebt sind und/oder die Schichten b) und c) auch durch eine Klebstoffschicht verklebt sind.

4. Schlauchfolie gemäß den Ansprüchen 1 und 2, **dadurch gekennzeichnet, dass** die Außenschicht a) eine Dicke von 40 µm bis 100 µm, insbesondere von 45 µm bis 75 µm hat.

5. Schlauchfolie gemäß irgendeinem der Ansprüche 1 bis 4, **dadurch gekennzeichnet, dass** die Ethylen/Vinylalkohol-Copolymer-Schicht b) eine Dicke von 5 µm bis 35 µm, insbesondere von 10 µm bis 30 µm hat.

6. Schlauchfolie gemäß irgendeinem der Ansprüche 1 bis 5, **dadurch gekennzeichnet, dass** die Ethylen/Vinylalkohol-Copolymer-Schicht b) einen Ethylengehalt von 29 Mol-% bis 32 Mol-% hat.

7. Schlauchfolie gemäß irgendeinem der Ansprüche 1 bis 6, **dadurch gekennzeichnet, dass** die Polypropylen-Copolymer-Schicht c) eine Dicke von 60 µm bis 100 µm, insbesondere von 65 µm bis 85 µm hat.

8. Schlauchfolie gemäß irgendeinem der Ansprüche 1 bis 7, **dadurch gekennzeichnet, dass** das Polypropylen-Copolymer zusätzlich zu Propylen aus Ethylen besteht.

9. Verfahren zur Herstellung von Schlauchfolien gemäß irgendeinem der Ansprüche 1 bis 8 durch Coextrusion der Folien a), b) und c).

10. Verwendung einer Schlauchfolie gemäß irgendeinem der Ansprüche 1 bis 8 zur Herstellung von abziehbaren Behältern für Lösungen, Suspensionen, Feststoffen oder Mischungen für die parenterale oder enterale Ernährung oder Schlauchernährung, gegebenenfalls in einer räumlich abgetrennten Anordnung der Inhaltsstoffe.

11. Verwendung gemäß Anspruch 10 durch Heißsiegeln entlang eines äußeren Begrenzungsrandes von zwei nebeneinander liegenden Schlauchfolien.

12. Verwendung einer Schlauchfolie gemäß Anspruch 10 für die Sterilisation bei einer Temperatur von 121 °C während einer Zeitspanne, die Sterilität gewährleistet, in Autoklaven vom Dampftyp oder in einer Wasserkaskade, oder zur Sterilisation mit Ethylenoxid.

13. Abziehbare, sterilisierbare Behälter, die gemäß irgendeinem der Ansprüche 10 bis 12 erhältlich sind.

## Revendications

1. Film tubulaire composite stérilisable en polymères coextrudés, destiné à être utilisé sous forme de récipients pour solutions, suspensions, solides ou mélanges pour nutrition parentérale ou entérale ou alimentation par sonde, les contenus pouvant, le cas échéant, y être spatialement séparés, ledit film tubulaire étant doté d'une structure en trois couches disposées dans l'ordre suivant :
a) polyamide 11 et/ou poly(éther bloc amide) ;
b) copolymère poly(éthylène/alcool vinylique) contenant de 27 à 38 % en moles de motifs d'éthylène ;
c) et copolymère polypropylène à phase homogène, approprié pour constituer la surface interne d'un récipient.

2. Film tubulaire composite stérilisable en polymères coextrudés, conforme à la revendication 1, **caractérisé en ce que** la couche (a) contient un polymère poly(éther bloc amide).

3. Film tubulaire composite stérilisable en polymères coextrudés, conforme à la revendication 1, **caractérisé en ce que** les couches (a) et (b) sont liées par une couche d'adhésif et/ou que les couches (b) et (c) sont également liées par une couche d'adhésif.

4. Film tubulaire conforme à la revendication 1 ou 2, **caractérisé en ce que** la couche externe (a) est épaisse de 40 à 100 µm, et en particulier de 45 à 75 µm.

5. Film tubulaire conforme à l'une des revendications 1 à 4, **caractérisé en ce que** la couche (b) de copolymère poly(éthylène/alcool vinylique) est épaisse de 5 à 35 µm, et en particulier de 10 à 30 µm.

6. Film tubulaire conforme à l'une des revendications 1 à 5, **caractérisé en ce que** le copolymère poly(éthylène/alcool vinylique) de la couche (b) contient de 29 à 32 % en moles de motifs d'éthylène.

7. Film tubulaire conforme à l'une des revendications 1 à 6, **caractérisé en ce que** la couche (c) de copolymère polypropylène est épaisse de 60 à 100 µm, et en particulier de 65 à 85 µm.

8. Film tubulaire conforme à l'une des revendications 1 à 7, **caractérisé en ce que** le copolymère polypropylène est composé d'éthylène, en plus du propylène.

9. Procédé de fabrication de films tubulaires conformes à l'une des revendications 1 à 8, par coextrusion de feuillets (a), (b) et (c).

10. Emploi d'un film tubulaire conforme à l'une des revendications 1 à 8 dans la fabrication de récipients ouvrables par pelage pour solutions, suspensions, solides ou mélanges pour nutrition parentérale ou entérale ou alimentation par sonde, les contenus pouvant, le cas échéant, y être spatialement séparés.

11. Emploi conforme à la revendication 10, dans lequel on effectue un thermoscellage le long d'un bord de pourtour de deux films tubulaires adjacents.

12. Emploi d'un film tubulaire, conforme à la revendication 10, pour une stérilisation à la température de 121°C, poursuivie pendant un laps de temps qui garantit la stérilité, en autoclave à vapeur d'eau ou en cascade d'eau, ou pour une stérilisation à l'oxyde d'éthylène.

13. Récipients stérilisables et ouvrables par pelage, que l'on peut obtenir conformément à l'une des revendications 10 à 12.
